# EUROPÄISCHE PATENTSCHRIFT

(11) **EP 0 781 897 B1**
(45) Veröffentlichungstag und Bekanntmachung des Hinweises auf die Patenterteilung: **23.05.2001**
(21) Anmeldenummer: 96810822.5
(22) Anmeldetag: 25.11.1996
(51) Int. Cl.: F01D 25/00

(54) **Verfahren und Vorrichtung zur Nassreinigung der Düsenrings einer Abgasturbolader-Turbine**
Method and device for the wet cleaning of the nozzle ring of a turbocharger
Méthode et dispositif pour le nettoyage humide des anneaux de tuyères de turbocompresseur

(30) Priorität: 29.12.1995 DE 19549142
(43) Veröffentlichungstag der Anmeldung: 02.07.1997
(73) Patentinhaber: ABB Turbo Systems AG, 5401 Baden (CH)
(72) Erfinder: Beck, André, Concord, NC 28025 (US); Häberle, Dieter, 79809 Weilheim (DE); Kronthaler, Johann, 5408 Ennetbaden (CH); Menzies, Gavin John, 5443 Niederrohrdorf (CH); Telschow, Dirk, Dr., 5417 Untersiggenthal (CH); Zumbrunn, Jonas, 4456 Tenniken (CH)
(74) Vertreter: ABB Patent Attorneys

(56) Entgegenhaltungen:
- CH-A- 660 056
- DE-A- 2 008 503
- GB-A- 1 460 675
- US-A- 4 548 040

## Beschreibung

### Technisches Gebiet

Die Erfindung betrifft ein Verfahren zur Nassreinigung des Düsenrings einer Abgasturbine gemäss dem Oberbegriff von Patentanspruch 1 sowie Vorrichtungen zur Durchführung dieses Verfahrens nach dem gemeinsamen Oberbegriff der Patentansprüche 6 und 8.

Die Verwendung von Abgasturboladern zur Leistungssteigerung von Brennkraftmaschinen ist heute weit verbreitet. Dabei wird die Abgasturbine des Turboladers von den Abgasen der Brennkraftmaschine beaufschlagt und deren kinetische Energie zum Ansaugen und Verdichten von Luft für die Brennkraftmaschine verwendet. In Abhängigkeit von der konkreten Betriebssituation und der Zusammensetzung der zum Antrieb der Brennkraftmaschine verwendeten Brennstoffe kommt es in der Abgasturbine früher oder später zu einer Verschmutzung der Lauf schaufeln und des Düsenrings, wobei letzterer wesentlich stärker betroffen ist. Im Schwerölbetrieb bildet sich auf dem Düsenring eine harte Schmutzschicht aus. Solche Schmutzablagerungen im Bereich des Düsenrings führen zu einem schlechteren Turbinenwirkungsgrad und demzufolge zur Verringerung der Leistung der Brennkraftmaschine. Ausserdem kommt es im Brennraum zu einer Erhöhung der Abgastemperaturen sowie der Drücke, wodurch die Brennkraftmaschine und insbesondere deren Ventile geschädigt oder gar zerstört werden können. Deshalb müssen die Düsenringe regelmässig von den ihnen anhaftenden Verschmutzungen befreit werden.

Eine Reinigung der Düsenringe in demontiertem Zustand erfordert das Abschalten des Turboladers über einen längeren Zeitraum und ist daher nicht erwünscht. Demzufolge haben sich Reinigungsverfahren durchgesetzt, bei denen der Turbolader in Betrieb bleiben kann und nicht demontiert werden muss. Als geeignete Verfahren zur Beseitigung von Düsenring-Verschmutzungen sind die Nassreinigung mit Wasser und die Trockenreinigung mit einem Granulat bekannt. Die Einspeisung des jeweilige Reinigungsmediums erfolgt stromauf der Abgasturbine, im Bereich der diese mit der Brennkraftmaschine verbindenden Abgasleitung.

Bei der Nassreinigung verdampft ein grosser Teil des eingesetzten Wassers wegen der hohen Abgastemperaturen der Brennkraftmaschine. Somit kann nur ein Teil des Wassers zur Reinigung genutzt werden. Die Temperaturen der am Turbineneintritt befindlichen Bauteile liegen bei Vollast einer Viertakt-Brennkraftmaschine oberhalb des für die Nassreinigung zulässigen Maximalwertes. Um thermische Beschädigungen des Düsenrings, der Laufschaufeln, des Abdeckrings sowie des Turbinengehäuses zu vermeiden, muss die Leistung der Brennkraftmaschine vor dem Wassereintritt in die Abgasturbine reduziert werden. Aufgrund der unterschiedlichen Ausdehnung von Gehäuse und Turbinenlaufrad kann es bei grösseren Temperaturschwankungen auch zum Streifen des Turbinenlaufrades an dessen Abdeckring kommen. Damit sind einerseits Wirkungsgradverluste verbunden, andererseits können Unwuchten entstehen. Ausserdem wird den Abgasen durch die Verdampfung des Wassers Energie entzogen, so dass die Drehzahl der Abgasturbine und damit die Leistung des Verdichters sinkt. Damit geht ein zusätzlicher Leistungsabfall der Brennkraftmaschine einher.

Bei der Trockenreinigung treten diese Nachteile nicht auf. Jedoch kann der Granulateinsatz zu Erosionsproblemen im Turbinengehäuse, am Düsenring und an den Laufschaufeln der Abgasturbine führen.

Der grösste Nachteil beider Verfahren ist die ungleichmässige Verteilung des Reinigungsmediums, weshalb nur bestimmte Bereiche des feststehenden Düsenrings mit diesem in Kontakt kommen. Demzufolge können die Verschmutzungen lediglich partiell beseitigt werden, so dass der Reinigungserfolg dieser beiden, in erster Linie auf der mechanischen Wirkung des Reinigungsmediums beruhenden Verfahren, der Reinigung in demontiertem Zustand unterlegen ist. Daher können mit diesen Lösungen zwar die Zeitintervalle bis zur nächsten vollständigen Reinigung des Düsenrings erhöht werden, jedoch bleibt die Demontage des Turboladers zu Reinigungszwecken unerlässlich.

### Stand der Technik

Ein derartiges Verfahren und derartige Vorrichtungen sind Stand der Technik. US-A-4 4548 040 beschreibt eine Vorrichtung zur Nassreinigung eines Schaufeln aufweisenden Düsenrings eines vom Abgas einer Verbrennungskraftmaschine angetriebenen Abgasturboladers. Bei dieser Vorrichtung wird über einen Drucksensor ermittelt, ob der Düsenring verschmutzt ist. Falls ein Reinigungsbedarf bestehen sollte, werden die Drehzahlen von Maschine und Abgasturbolader herabgesetzt und es wird sodann ein Reinigungszyklus angefordert. Bei diesem Reinigungszyklus wird über einen vorbestimmten Zeitraum mittels Düsen Wasser in den Abgasstrom der Verbrennungskraftmaschine eingespritzt, um damit die Schaufeln des Düsenrings zu reinigen. Nach dem vorbestimmten Zeitraum ist der Reinigungszyklus abgeschlossen und es werden die Maschine und der Turbolader wieder hochgefahren. Es wird sodann überprüft, ob der Düsenring ausreichend gereinigt ist. Sollte dies nicht der Fall sein, besteht also weiterhin Reinigungsbedarf, so werden erneut die Drehzahlen von Maschine und Lader herabgesetzt und ein weiterer Reinigungszyklus angefordert.

### Darstellung der Erfindung

Der Erfindung, wie sie in den Patentansprüchen definiert ist, liegt die Aufgabe zugrunde, ein Verfahren sowie Vorrichtungen zur Nassreinigung des Düsenrings einer Abgasturbine zu schaffen, mit denen trotz Verwendung geringer Wassermengen eine grosse Reinigungswirkung erzielt wird. Ausserdem soll die Leistung der Brennkraftmaschine vor Beginn des Reinigungsvorganges weniger als bisher nötig reduziert und die Funktionssicherheit der Abgasturbine erhöht werden.

Beim erfindungsgemässen Verfahren wird nach Feststellung eines Reinigungsbedarfs ein selbständig ablaufender Reinigungszyklus ausgelöst, bei dem das Wasser mehrmals kurzzeitig in den Bereich vor dem Düsenring eingespritzt und zwischen den Einspritzvorgängen eine Einspritzpause zur Wiedererwärmung des Düsenrings eingehalten wird.

Dazu ist im Gaseintrittgehäuse, und zwar im Bereich vor dem Düsenring, zumindest eine radiale Ausnehmung ausgebildet. In jeder Ausnehmung ist eine Einspritzdüse angeordnet und über jeweils eine Leitung mit der Zuleitung für das Wasser verbunden. Zwischen den die Zustandsänderungen der Abgase der mit der Abgasturbine verbundenen Brennkraftmaschine erfassenden Messglied und den in der Zuleitung befindlichen Stellglied ist ein Steuerelement angeordnet.

Diese Ausbildung des Gaseintrittgehäuses ermöglicht das Einspritzen des Wassers in den Bereich unmittelbar vor dem Düsenring. Das Steuerelement regelt den oben beschriebenen Reinigungszyklus. Dabei wird das relativ kalte Wasser nach dem Einspritzen in den Abgasstrom der Brennkraftmaschine von diesem zum Düsenring mitgeführt. Dort trifft es auf die Schmutzablagerungen des Düsenrings, welche durch die Verdampfung des Wassers auf der Oberfläche plötzlich sehr stark abgekühlt werden. Mit dieser Thermoschockbehandlung wird das Abplatzen der Schmutzschicht und bei mehrmaliger Anwendung ein sauberer Düsenring erreicht. Zusätzlich zu dem beabsichtigten Effekt tritt auch an den Schaufeln des Turbinenlaufrades eine Reinigungswirkung auf. Aufgrund der kurzzeitigen Einspritzung werden nur noch vergleichsweise kleine Wassermengen eingesetzt. Die gleichmässige Wasserbeaufschlagung führt zu einer geringeren thermischen Belastung der Turbinenkomponenten, was deren thermische Beschädigungen wesentlich verringert. Daher ist die erforderliche Absenkung der Abgastemperatur, d.h. der Leistung der Brennkraftmaschine, vor Beginn des Reinigungsvorganges wesentlich geringer als das bisher nötig war. Deshalb kann die Brennkraftmaschine während der Reinigung des Düsenrings bei einer höheren Last betrieben werden.

Bei relativ weichen Ablagerungen auf dem Düsenring ist diese Vorrichtung vorteilhaft auch für die herkömmlichen Verfahren zur Nassreinigung, d.h. für die auf der mechanischen Reinigungswirkung des Wassers beruhenden Reinigungsprinzipien, einsetzbar.

Ein weiterer Vorteil der deutlich verringerten Einspritzmenge des Wassers besteht darin, dass das Gehäuse und das Laufrad der Abgasturbine während des Reinigungsvorganges eine geringere Ausdehnung erfahren. Damit können das Risiko des Streifens des Turbinenlaufrades am Abdeckring und die damit verbundenen Nachteile vermieden werden. Ausserdem wird von den heissen Abgasen der Brennkraftmaschine eine wesentlich kleinere Wassermenge verdampft. Dadurch erfahren die Abgase einen gegenüber den zur Nassreinigung bekannten Lösungen des Standes der Technik geringeren Energieverlust, so dass die Drehzahl der Abgasturbine und damit die Leistung des Verdichters im wesentlichen konstant bleibt. Auf diese Weise kann der Leistungsabfall der Brennkraftmaschine während der Nassreinigung deutlich verringert werden.

Besonders günstig erweist es sich, wenn nacheinander bis zu fünf Einspritzvorgänge stattfinden und eine Einspritzdauer von unter zehn Sekunden je Einspritzvorgang sowie eine Einspritzpause von zumindest dem Zwanzigfachen der Einspritzdauer eingehalten wird. Mit diesem Verfahren ist sowohl eine optimale Reinigung des Düsenrings als auch eine minimale thermische Belastung der Turbinenkomponenten gewährleistet.

Ferner ist es besonders zweckmässig, wenn die Einspritzdüsen nur bis einschliesslich ihrer Mündungen in den Strömungskanal hineinreichen. Dadurch bleibt die Beeinträchtigung des Abgasstroms gering und der diesbezügliche Wirkungsgradverlust des Turboladers wird vernachlässigbar.

Es ist besonders vorteilhaft, wenn das Wasser rechtwinklig zur Strömungsrichtung des Abgases in den Strömungskanal eingespritzt wird. Obwohl die Einspritzdüsen unmittelbar vor dem Düsenring angeordnet sind, kann dadurch ihre Anzahl relativ klein gehalten werden. Jede Einspritzdüse weist dazu eine Drosselstelle auf, an welche stromab zwei Verteilkanäle anschliessen, die mit einem grösseren Gesamtdurchmesser als der Durchmesser der Drosselstelle ausgebildet sind. Letztere münden jeweils seitlich der Einspritzdüse und rechtwinklig zur Strömungsrichtung der Abgase in den Strömungskanal. Aufgrund des Durchmessersprungs von der Drosselstelle zu den beiden Verteilkanälen werden diese vom Wasser nicht vollständig ausgefüllt. Somit wird das Wasser jeweils in Form eines Flachstrahls in den Strömungskanal eingespritzt. Durch die Einwirkung des Abgasstromes auf die rechtwinklig eingespritzten Flachstrahlen entsteht ein in breiter Front auf den Düsenring auftreffender Wasservorhang. Trotz stark verringertem Wassereinsatz werden auf diese Weise mehrere Schaufeln des Düsenrings gleichmässig benetzt. Dadurch wird eine deutlich verbesserte Reinigung des Düsenrings erreicht.

Es ist von Vorteil, wenn sich die Zuleitung stromauf in eine Wasserleitung und in eine Luftleitung verzweigt, in letzterer ein zweites Stellglied angeordnet und dieses ebenfalls mit dem Steuerelement verbunden ist. In der Wasser- und der Luftleitung ist jeweils ein Rückschlagventil angeordnet. Dadurch kann sowohl in den Einspritzpausen eines Reinigungszyklus als auch im Zeitraum zwischen den Reinigungszyklen Sperrluft über die Einspritzdüsen eingeleitet werden, so dass diese nicht verstopfen. Die Rückschlagventile verhindern das Eindringen der heissen Abgase in die Zuleitung und damit eine mögliche Zerstörung der stromauf angeordneten Stellglieder.

Schliesslich ist im oder am Gaseintrittgehäuse eine Ringleitung angeordnet, welche die zu den Einspritzdüsen führenden Leitungen mit der Zuleitung verbindet. Bei dieser Lösung wird eine platzsparende Anordnung im Bereich des Gaseintrittgehauses dadurch erreicht, dass die Ringleitung nur an einer Stelle mit der Zuleitung verbunden werden muss und die weitere Verteilung des Wassers bis hin zu den Einspritzdüsen intern erfolgen kann.

Bei entsprechender Geometrie des Gaseintrittgehäuses werden Einspritzdüsen verwendet, welche das Wasser in Strömungsrichtung des Abgases in den Strömungskanal einspritzen. Dazu sind deren Mündungen in Strömungsrichtung der Abgase ausgerichtet.

Es ist vorteilhaft, wenn dem Wasser vor dem Einspritzen in den Strömungskanal reinigungswirksame Additive zugesetzt werden. Mit einem solchen Verfahren lässt sich die Reinigungswirkung weiter verbessern.

Das Prinzip des Thermoschocks kann nicht nur zur Reinigung der Düsenringe und Laufschaufeln von Turbolader-Abgasturbinen, sondern auch für andere, im Abgastrakt von Strömungs- und Verbrennungsmaschinen angeordnete Bauteile eingesetzt werden, z.B. für die Schaufeln einer Gasturbine oder in einem Abhitzekessel. Ebenso können solche Maschinen zunächst demontiert, die verschmutzten Bauteile separat erhitzt und anschliessend kurzzeitig stark abgekühlt werden.

### Kurze Beschreibung der Zeichnung

In der Zeichnung sind zwei Ausführungsbeispiele der Erfindung anhand der Axialturbine eines Abgasturboladers dargestellt.

Es zeigen:
- Fig. 1: einen Teillängsschnitt der Abgasturbine;
- Fig. 2: einen Querschnitt durch die Reinigungsvorrichtung, entlang der Linie II-II in Fig. 1, einschliesslich der Regelung;
- Fig. 3: einen Schnitt durch eine der in Fig. 2 gezeigten Einspritzdüsen, vergrössert dargestellt;
- Fig. 4: einen Darstellung einer Einspritzdüse analog der Fig. 3, jedoch in einem zweiten Ausführungsbeispiel.

Es sind nur die für das Verständnis der Erfindung wesentlichen Elemente gezeigt. Nicht dargestellt sind beispielsweise die Brennkraftmaschine und die Verdichterseite des Abgasturboladers.

### Weg zur Ausführung der Erfindung

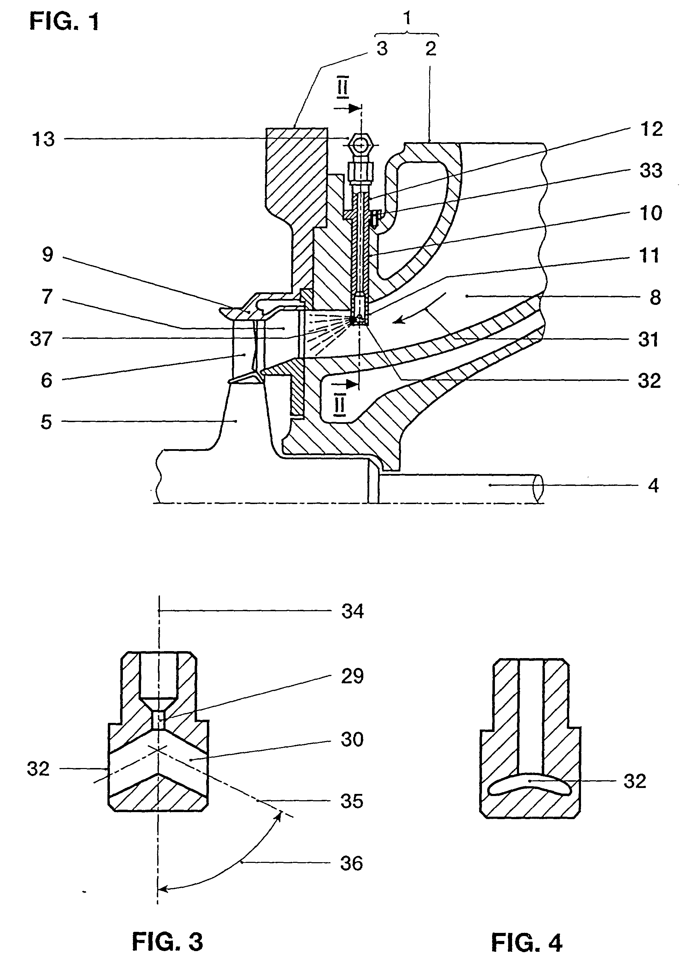

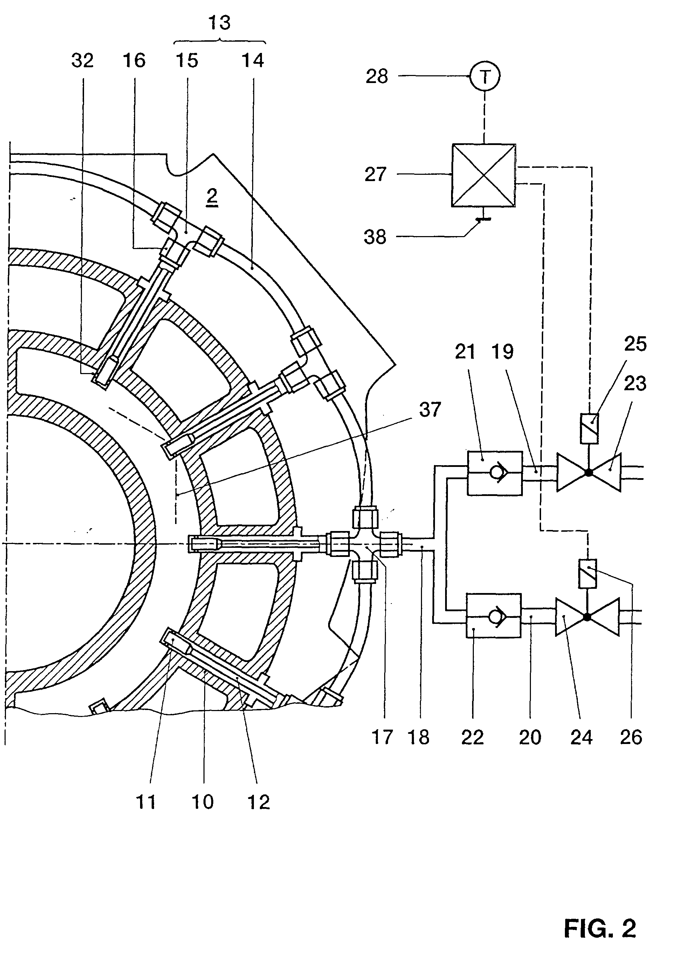

Die Abgasturbine eines Turboladers weist ein Turbinenghäuse 1 auf, welches von einem Gaseintritt- und einem Gasaustrittgehäuse 2, 3 gebildet wird. Im Turbinengehäuse 1 sind ein von einer Welle 4 getragenes Turbinenlaufrad 5 mit Laufschaufeln 6 und stromauf davon ein Düsenring 7 angeordnet (Fig. 1). Zwischen dem Turbinenlaufrad 5 und dem Turbinenghäuse 1 ist ein Strömungskanal 8 ausgebildet, welcher die Abgase eines nicht dargestellten, mit dem Turbolader verbundenen Dieselmotors aufnimmt und zum Turbinenlaufrad 5 weiterleitet. Nach aussen wird das Turbinenlaufrad 5 von einem Abdeckring 9 begrenzt.

Im Bereich stromauf des Düsenrings 7 sind zehn radiale Ausnehmungen 10 im Gaseintrittgehäuse 2 angeordnet und gleichmässig über dessen Umfang verteilt (Fig. 2). Jede Ausnehmung 10 nimmt eine Einspritzdüse 11 auf. Die Einspritzdüsen 11 sind über jeweils eine Leitung 12 mit einer aussen am Gaseintrittgehäuse 2 befestigten Ringleitung 13 verbunden. Natürlich kann die Ringleitung 13 auch im Gaseintrittgehäuse 2 angeordnet sein. Zur Vereinfachung der Montage besteht die Ringleitung 13 aus einzelnen Leitungsabschnitten 14 die über T-Stücke 15 miteinander verschraubt sind. Die Leitungen 12 sind mittels jeweils eines Armaturanschlusses 16 am nach innen ragenden Ende des entsprechenden T-Stückes 15 befestigt. In der Ringleitung 13 ist an Stelle eines der T-Stücke 15 ein Kreuzstück 17 angeordnet. Zusätzlich zur entsprechenden Leitung 12 greift am Kreuzstück 17 eine Zuleitung 18 an, welche sich stromauf in eine Wasserleitung 19 und eine Luftleitung 20 verzweigt. In der Wasserleitung 19 und in der Luftleitung 20 ist jeweils ein Rückschlagventil 21, 22 angeordnet. Stromauf jedes Rückschlagventils 21, 22 ist ein als Zweiwegeventil ausgebildetes Stellglied 23, 24 in der Wasserleitung 19 bzw. der Luftleitung 20 angeordnet. Die Zweiwegeventile 23, 24 sind über jeweils eine Magnetbetätigung 25, 26 mit einem gemeinsamen Steuerelement 27 wirkverbunden, welches seinerseits mit einem als Wärmesensor ausgebildeten Messglied 28 zusammenwirkt. Der Wärmesensor 28 ist in einer nicht dargestellten, mit der Abgasturbine verbundenen Abgasleitung der Brennkraftmaschine angeordnet. Eine Anordnung des Wärmesensors 28 im Strömungskanal 8 ist ebenfalls möglich. Die Wasserleitung 19 ist mit einem nicht dargestellten Wasserreservoir und die Luftleitung 20 mit dem ebenfalls nicht dargestellten Verdichter des Abgasturboladers verbunden. Natürlich kann auch externe Druckluft zugeführt werden.

Jede Einspritzdüse 11 weist eine Drosselstelle 29 auf, an die stromab zwei Verteilkanäle 30 anschliessen, deren Gesamtdurchmesser grösser als der Durchmesser der Drosselstelle 29 ausgebildet ist (Fig. 3). Beide Verteilkanäle 30 besitzen eine rechtwinklig zur Strömungsrichtung 31 der Abgase ausgerichtete, seitliche Mündung 32 in den Strömungskanal 8. Die Fixierung der Mündungen 32 in der erforderlichen Richtung erfolgt mittels einer im Gaseintrittgehäuse 2 befestigten Justierschraube 33. Die Einspritzdüsen 11 sind so in den Ausnehmungen 10 befestigt, dass lediglich ihre Mündungen 32 in den Strömungskanal 8 hineinreichen (Fig. 2). Jede Einspritzdüse 11 besitzt eine Mittelsenkrechte 34 und die Verteilkanäle 30 jeweils eine Mittelachse 35. Zwischen der Mittelsenkrechten 34 sowie jeder der Mittelachsen 35 ist ein Einspritzwinkel 36 von ca. 60 Grad ausgebildet (Fig. 3). In Abhängigkeit von der Gehäuseausführung wird ein anderer Einspritzwinkel 36 gewählt.

Beim Betrieb des Abgasturboladers wird durch den Wärmesensor 28 ständig die Abgastemperatur der Brennkraftmaschine gemessen. Bei einer entsprechenden, auf die Verschmutzung des Düsenrings 7 zurückzuführenden Temperaturerhöhung der Abgase wird das Zweiwegeventil 23 über die Magnetbetätigung 25 bzw. das Steuerelement 27 angesteuert, so dass durch die Einspritzdüse 11 Wasser 37 in den Strömungskanal 8 der Abgasturbine eingespritzt wird. Selbstverständlich kann auch eine andere Regelgrösse, wie z.B. der Druck der Abgase oder die Drehzahl des Turboladers, erfasst und ein dafür geeignetes Messglied angeordnet werden.

Nach Feststellung des Reinigungsbedarfs wird über einen mit dem Steuerelement 27 verbundenen Druckknopf 38 manuell ein selbständig ablaufender Reinigungszyklus ausgelöst. Dabei wird das Wasser 37 fünfmal hintereinander in den Strömungskanal 8 eingespritzt. Die Einspritzdauer beträgt jeweils vier Sekunden, wobei zwischen den einzelnen Einspritzvorgängen eine Einspritzpause zur Wiedererwärmung des Düsenrings 7 und der Laufschaufeln 6 von jeweils fünf Minuten eingehalten wird. Natürlich kann entsprechend den konkreten Betriebsbedingungen auch ein davon abweichender Reinigungsablauf programmiert werden. Auch die Auslösung des Reinigungszyklus kann automatisch erfolgen.

Aufgrund der Ausbildung der Einspritzdüse 11 erfolgt ein seitliches Einspritzen des Wassers 37, rechtwinklig zur Strömungsrichtung 31 der Abgase. Durch die anschliessende Einwirkung des Abgasstromes auf das Wasser 37 entsteht ein in breiter Front auf den Düsenring 7 auftreffender Wasservorhang. Damit werden pro Einspritzdüse 11 mehrere Schaufeln des Düsenrings 7 gleichmässig und zielgerichtet benetzt, so dass sich trotz deutlich verringertem Wassereinsatz die Reinigungswirkung verbessert. Eier Einspritzwinkel 36 von ca. 60 Grad ermöglicht eine optimale Wasserverteilung, d.h. das Auftreffen des Wassers im mittleren Bereich des Düsenrings 7. Das Risiko des Streifens der Laufschaufeln 6 des Turbinenlaufrades 5 am Abdeckring 9 kann verringert werden, weil letzterer wegen des kurzzeitigen Wassereinspritzens weniger abkühlt.

Die Rückschlagventile 21, 22 verhindern während der Schaltvorgänge das Einströmen der heissen Abgase in die Wasser-bzw. die Luftleitung 19, 20. Sowohl in den Einspritzpausen eines Reinigungszyklus als auch im Zeitraum zwischen den Reinigungszyklen wird über die Luftleitung 20 ständig Sperrluft durch die Einspritzdüsen 11 eingeleitet. Dazu wird das in der Luftleitung 20 angeordnete Zweiwegeventil 24 von der Magnetbetätigung 26 bzw. vom Steuerelement 27 immer dann geöffnet, wenn das Zweiwegeventil 23 der Wasserleitung 19 geschlossen wird. Mit Hilfe der Sperrluft werden die Einspitzdüsen 11 ständig freigehalten. Durch die Abzweigung der eingesetzten Druckluft vom Verdichter des Abgasturboladers stellt sich der zum Freihalten der Einspritzdüsen 11 erforderliche Luftdruck vorteilhaft selbständig ein.

In einem zweiten Ausführungsbeispiel ist jede Einspritzdüse 11 mit nur einer Mündung 32 versehen (Fig. 4). Die Mündungen 32 sind in Strömungsrichtung 31 der Abgase ausgerichtet. Natürlich können auch mehrere, derart ausgebildete Mündungen 32 je Einspritzdüse 11 angeordnet werden. Mit diesen Mündungen 32 wird das Wasser 37 in Strömungsrichtung 31 des Abgases in den Strömungskanal 8 eingespritzt.

Natürlich ist das Prinzip des Thermoschocks nicht auf die Reinigung der Düsenringe 7 und Laufschaufeln 6 von Turbolader-Abgasturbinen beschränkt, sondern auch für andere im Abgastrakt von Strömungs- und Verbrennungsmaschinen angeordnete Bauteile einsetzbar. Beispielsweise können das die Schaufeln einer Gasturbine oder in einem Abhitzekessel angeordnete Bauteile sein. Um den beschriebenen Reinigungseffekt zu erzielen können die verschmutzten Bauteile solcher Maschinen auch zunächst demontiert, separat erhitzt und anschliessend kurzzeitig stark abgekühlt werden.

### Bezugszeichenliste

- 1: Turbinenghäuse
- 2: Gaseintrittgehäuse
- 3: Gasaustrittgehäuse
- 4: Welle
- 5: Turbinenlaufrad
- 6: Laufschaufel
- 7: Düsenring
- 8: Strömungskanal
- 9: Abdeckring
- 10: Ausnehmung, radial
- 11: Einspritzdüse
- 12: Leitung
- 13: Ringleitung
- 14: Leitungsabschnitt
- 15: T-Stück
- 16: Armaturanschluss
- 17: Kreuzstück
- 18: Zuleitung
- 19: Wasserleitung
- 20: Luftleitung
- 21: Rückschlagventil von 19
- 22: Rückschlagventil von 20
- 23: Stellglied, Zweiwegeventil von 19
- 24: Stellglied, Zweiwegeventil von 20
- 25: Magnetbetätigung von 23
- 26: Magnetbetätigung von 24
- 27: Steuerelement
- 28: Messglied, Wärmesensor
- 29: Drosselstelle
- 30: Verteilkanal
- 31: Strömungsrichtung
- 32: Mündung
- 33: Justierschraube
- 34: Mittelsenkrechte
- 35: Mittelachse
- 36: Einspritzwinkel
- 37: Wasser
- 38: Druckknopf

## Patentansprüche

1. Verfahren zur Nassreinigung eines Verschmutzungen aufweisenden Düsenrings (7) einer Abgasturbine, bei dem eine die Verschmutzungen als Zustandsänderung der Abgase erkennende Regelgrösse der Abgasturbine erfasst wird und die erfasste Regelgrösse auf ein Reinigungsbedarf feststellendes Steuerelement (27) wirkt, welches bei Feststellung des Reinigungbedarfs einen unabhängig von der Regelgrösse, selbständig ablaufenden Reinigungszyklus auslöst, während dessen Ablauf stromauf des Düsenrings (7) in den Bereich vor dem Düsenring (7) Wasser (37) in den Abgasstrom einer Brennkraftmaschine eingespritzt wird, dadurch gekennzeichnet, dass der Reinigungszyklus folgende Verfahrensschritte umfasst:
a) das Wasser (37) wird mehrmals kurzzeitig eingespritzt, und
b) nach jedem Einspritzvorgang wird eine Einspritzpause zur Wiedererwärmung des Düsenrings (7) eingehalten, welche derart bemessen ist, dass das nachfolgend eingespritzte und an den Düsenring (7) geführte Wasser (37) ein Abplatzen von Schmutzablagerungen am Düsenring (7) infolge Thermoschock bewirkt.

2. Verfahren nach Anspruch 1, dadurch gekennzeichnet, dass nacheinander bis zu fünf Einspritzvorgänge stattfinden und eine Einspritzdauer von unter zehn Sekunden je Einspritzvorgang sowie eine Einspritzpause von zumindest dem Zwanzigfachen der Einspritzdauer eingehalten wird.

3. Verfahren nach Anspruch 1 oder 2, dadurch gekennzeichnet, dass das Wasser (37) rechtwinklig zur Strömungsrichtung (31) des Abgases eingespritzt wird.

4. Verfahren nach Anspruch 1 oder 2, dadurch gekennzeichnet, dass das Wasser (37) in Strömungsrichtung (31) des Abgases eingespritzt wird.

5. Verfahren nach einem der Ansprüche 1 bis 4, dadurch gekennzeichnet, dass dem Wasser (37) vor dem Einspritzen reinigungswirksame Additive zugesetzt werden.

6. Vorrichtung zur Durchführung des Verfahrens nach einem der Ansprüche 1 bis 5 beim Düsenring (7) einer Abgasturbine, welche
a) zumindest aus einem Turbinengehäuse (1) mit einem Gaseintritt- und einem Gasaustrittgehäuse (2, 3), einem im Turbinengehäuse (1) angeordneten, von einer Welle (4) getragenen Turbinenlaufrad (5), einem zwischen Turbinenlaufrad (5) und Turbinengehäuse (1) ausgebildeten Strömungskanal (8) für die Abgase einer Brennkraftmaschine sowie dem stromauf des Turbinenlaufrades (5) angeordneten Düsenring (7) besteht, welche
b) mehrere stromauf des Düsenrings (7) angeordnete Einspritzdüsen (11) aufweist, die jeweils über eine Zuleitung (18) mit Wasser (37) versorgt werden, und die jeweils in einer von mehreren in das Gaseintrittsgehäuse (2) eingeformten Ausnehmungen (10) angeordnet sind, und welche
c) ein in der Zuleitung (18) angeordnetes Stellglied (23) aufweist, das mit einem die Zustandsänderungen der Abgase erfassenden Messglied (28) wirkverbunden ist, sowie ein zwischen dem Messglied (28) und dem Stellglied (23) angeordnetes Steuerelement (27),
dadurch gekennzeichnet, dass
d) die Ausnehmungen (10) radial geführt sind, und dass
e) jede Einspritzdüse (11) eine Drosselstelle (29) besitzt, an die stromab zwei mit einem grösseren Gesamtdurchmesser als der Durchmesser der Drosselstelle (29) ausgebildete Verteilkanäle (30) anschliessen, welche jeweils eine rechtwinklig zur Strömungsrichtung (31) der Abgase ausgerichtete, seitliche Mündung (32) in den Strömungskanal (8) besitzen, wobei jede Einspritzdüse (11) nur bis einschliesslich ihrer Mündung (32) in den Strömungskanal (8) hineinragt.

7. Vorrichtung nach Anspruch 6, dadurch gekennzeichnet, dass jede Einspritzdüse (11) eine Mittelsenkrechte (34) und die Verteil kanäle (30) eine Mittelachse (35) besitzen und zwischen der Mittelsenkrechten (34) sowie den Mittelachsen (35) jeweils ein Einspritzwinkel (36) von ca. 60 Grad ausgebildet ist.

8. Vorrichtung zur Durchführung des Verfahrens nach einem der Ansprüche 1 bis 5 beim Düsenring (7) einer Abgasturbine, welche
a) zumindest aus einem Turbinengehäuse (1) mit einem Gaseintritt- und einem Gasaustrittgehäuse (2, 3), einem im Turbinengehäuse (1) angeordneten, von einer Welle (4) getragenen Turbinenlaufrad (5), einem zwischen Turbinenlaufrad (5) und Turbinengehäuse (1) ausgebildeten Strömungskanal (8) für die Abgase einer Brennkraftmaschine sowie dem stromauf des Turbinenlaufrades (5) angeordneten Düsenring (7) besteht, welche
b) mehrere stromauf des Düsenrings (7) angeordnete Einspritzdüsen (11) aufweist, die jeweils über eine Zuleitung (18) mit Wasser (37) versorgt werden, und die jeweils in einer von mehreren in das Gaseintrittsgehäuse (2) eingeformten Ausnehmungen (10) angeordnet sind, und welche
c) ein in der Zuleitung (18) angeordnetes Stellglied (23) aufweist, das mit einem die Zustandsänderungen der Abgase erfassenden Messglied (28) wirkverbunden ist, sowie ein zwischen dem Messglied (28) und dem Stellglied (23) angeordnetes Steuerelement (27),
dadurch gekennzeichnet, dass
d) die Ausnehmungen (10) radial geführt sind, und dass
e) die Mündungen (32) der Einspritzdüsen (11) in Strömungsrichtung (31) der Abgase ausgerichtet sind, wobei jede Einspritzdüse (11) nur bis einschliesslich ihrer Mündung (32) in den Strömungskanal (8) hineinragt.

9. Vorrichtung nach einem der Ansprüche 6 bis 8, dadurch gekennzeichnet, dass sich die Zuleitung (18) stromauf in eine Wasserleitung (19) und in eine Luftleitung (20) verzweigt, in letzterer ein zweites Stellglied (24) angeordnet und dieses ebenfalls mit dem Steuerelement (27) verbunden ist.

10. Vorrichtung nach Anspruch 9, dadurch gekennzeichnet, dass in der Wasser- und der Luftleitung (19, 20) jeweils ein Rückschlagventil (21, 22) angeordnet ist.

11. Vorrichtung nach einem der Ansprüche 6 bis 10 dadurch gekennzeichnet, dass im oder am Gaseintrittgehäuse (2) eine Ringleitung (13) angeordnet ist, welche die zu den Einspritzdüsen (11) führenden Leitungen (12) mit der Zuleitung (18) verbindet.

## Claims

1. Method for the wet cleaning of a contaminated nozzle ring (7) of an exhaust-gas turbine, in which method a regulated variable, recognizing the contaminants as a change of state of the exhaust gases, of the exhaust-gas turbine is sensed, and the regulated variable sensed acts on a control element (27) which establishes whether cleaning is required and, when it has been established that cleaning is required, initiates a cleaning cycle which runs automatically independently of the regulated variable, during the sequence of which cleaning cycle water (37) is injected into the exhaust-gas flow of an internal combustion engine upstream of the nozzle ring (7) into the region in front of the nozzle ring (7), characterized in that the cleaning cycle comprises the following method steps:
a) the water (37) is briefly injected several times, and
b) after each injection operation, an injection pause is maintained for reheating the nozzle ring (7), this injection pause being apportioned in such a way that the subsequently injected water (37) directed to the nozzle ring (7) causes dirt deposits on the nozzle ring (7) to break away as a result of thermoshock.

2. Method according to Claim 1, characterized in that up to five injection operations take place in succession, and an injection period of less than ten seconds per injection operation and an injection pause of at least twenty times the injection period are maintained.

3. Method according to Claim 1 or 2,
characterized in that the water (37) is injected at right angles to the flow direction (31) of the exhaust gas.

4. Method according to Claim 1 or 2,
characterized in that the water (37) is injected in the flow direction (31) of the exhaust gas.

5. Method according to one of Claims 1 to 4,
characterized in that additives which have a cleaning effect are added to the water (37) before injection.

6. Apparatus for carrying out the method according to one of Claims 1 to 5 at the nozzle ring (7) of an exhaust-gas turbine, which
a) consists of at least one turbine housing (1) having a gas-inlet housing (2) and a gas-outlet housing (3), a turbine impeller (5) arranged in the turbine housing (1) and carried by a shaft (4), a flow passage (8) formed between turbine impeller (5) and turbine housing (1) and intended for the exhaust gases of an internal combustion engine, and the nozzle ring (7) arranged upstream of the turbine impeller (5), and
b) has a plurality of injection nozzles (11) which are arranged upstream of the nozzle ring (7), are each supplied with water (37) via a feed line (18) and are each arranged in one of several apertures (10) formed in the gas-inlet housing (2), and
c) has an actuator (23), which is arranged in the feed line (18) and is operatively connected to a measuring element (28) sensing the changes of state of the exhaust gases, and a control element (27) arranged between the measuring element (28) and the actuator (23),
characterized in that
d) the apertures (10) are directed radially, and in that
e) each injection nozzle (11) has a choke point (29), adjoining which downstream are two distribution passages (30) which are formed with a larger overall diameter than the diameter of the choke point (29) and in each case have a lateral orifice (32) which is directed at right angles to the flow direction (31) of the exhaust gases and leads into the flow passage (8), each injection nozzle (11) projecting into the flow passage (8) only up to and including its orifice (32).

7. Apparatus according to Claim 6, characterized in that each injection nozzle (11) has a mid-perpendicular (34) and the distribution passages (30) have a centre axis (35), and an injection angle (36) of about 60 degrees is formed in each case between the mid-perpendicular (34) and the centre axes (35).

8. Apparatus for carrying out the method according to one of Claims 1 to 5 at the nozzle ring (7) of an exhaust-gas turbine, which
a) consists of at least one turbine housing (1) having a gas-inlet housing (2) and a gas-outlet housing (3), a turbine impeller (5) arranged in the turbine housing (1) and carried by a shaft (4), a flow passage (8) formed between turbine impeller (5) and turbine housing (1) and intended for the exhaust gases of an internal combustion engine, and the nozzle ring (7) arranged upstream of the turbine impeller (5), and
b) has a plurality of injection nozzles (11) which are arranged upstream of the nozzle ring (7), are each supplied with water (37) via a feed line (18) and are each arranged in one of several apertures (10) formed in the gas-inlet housing (2), and
c) has an actuator (23), which is arranged in the feed line (18) and is operatively connected to a measuring element (28) sensing the changes of state of the exhaust gases, and a control element (27) arranged between the measuring element (28) and the actuator (23),
characterized in that
d) the apertures (10) are directed radially, and in that
e) the orifices (32) of the injection nozzles (11) are oriented in the flow direction (31) of the exhaust gases, each injection nozzle (11) projecting into the flow passage (8) only up to and including its orifice (32).

9. Apparatus according to one of Claims 6 to 8,
characterized in that the feed line (18) branches upstream into a water line (19) and into an air line (20), a second actuator (24) is arranged in the latter, and this actuator (24) is likewise connected to the control element (27).

10. Apparatus according to Claim 9, characterized in that in each case a non-return valve (21, 22) is arranged in the water line and air line (19, 20).

11. Apparatus according one of Claims 6 to 10,
characterized in that a ring line (13) which connects the lines (12) leading to the injection nozzles (11) to the feed line (18) is arranged in or on the gas-inlet housing (2).

## Revendications

1. Procédé de nettoyage humide d'un anneau de tuyère (7) d'une turbine à gaz d'échappement, présentant des salissures, dans lequel on détecte l'une des grandeurs de réglage de la turbine à gaz d'échappement, déterminant l'encrassement en tant que modification de l'état des gaz d'échappement, et la grandeur de réglage détectée agit sur un élément de commande (27) établissant la nécessité d'un nettoyage, cet élément de commande, lors de l'établissement de la nécessité d'un nettoyage, déclenchant un cycle de nettoyage se déroulant automatiquement, indépendamment de la grandeur de réglage, pendant le déroulement duquel, en amont de l'anneau de tuyère (7), de l'eau (37) est injectée dans la région située avant l'anneau de tuyère (7) dans le courant de gaz d'échappement d'un moteur à combustion interne, caractérisé en ce que le cycle de nettoyage comprend les étapes suivantes :
a) l'eau (37) est injectée plusieurs fois pendant une courte durée, et
b) après chaque opération d'injection, une pause d'injection est maintenue pour réchauffer l'anneau de tuyère (7), ce réchauffement étant mesuré de telle sorte que l'eau (37) injectée par la suite et conduite au niveau de l'anneau de tuyère (7) provoque un écaillage des accumulations de crasse au niveau de l'anneau de tuyère (7) par suite d'un choc thermique.

2. Procédé selon la revendication 1, caractérisé en ce que jusqu'à cinq opérations d'injection se déroulent les unes après les autres et une durée d'injection inférieure à dix secondes pour chaque opération d'injection ainsi qu'une pause d'injection d'au moins vingt fois la durée de l'injection sont maintenues.

3. Procédé selon la revendication 1 ou 2 caractérisé en ce que l'eau (37) est injectée à angle droit par rapport au sens de l'écoulement (31) du gaz d'échappement.

4. Procédé selon la revendication 1 ou 2, caractérisé en ce que l'eau (37) est injectée dans le sens de l'écoulement (31) du gaz d'échappement.

5. Procédé selon l'une quelconque des revendications 1 à 4, caractérisé en ce que l'on ajoute des additifs nettoyants à l'eau (37) avant l'injection.

6. Dispositif pour la mise en oeuvre du procédé selon l'une quelconque des revendications 1 à 5 pour l'anneau de tuyère (7) d'une turbine à gaz d'échappement, qui :
a) se compose d'au moins un carter de turbine (1) comprenant un carter d'entrée de gaz et un carter de sortie de gaz (2, 3), d'un rotor de turbine (5) supporté par un arbre (4) et disposé dans le carter de turbine (1), d'un canal d'écoulement (8) formé entre le rotor de turbine (5) et le carter de la turbine (1) pour les gaz d'échappement d'un moteur à combustion interne ainsi que de l'anneau de tuyère (7) disposé en amont du rotor de turbine (5),
b) présente plusieurs buses d'injection (11) disposées en amont de l'anneau de tuyère (7), lesquelles sont alimentées en eau (37) chacune par une conduite d'alimentation (18), et qui sont disposées chacune dans l'un de plusieurs évidements (10) formés dans le carter d'entrée de gaz (2), et
c) présente un organe de réglage (23) disposé dans la conduite d'alimentation (18), lequel est connecté activement à un organe de mesure (28) détectant les variations d'état des gaz d'échappement, ainsi qu'un élément de commande (27) disposé entre l'organe de mesure (28) et l'organe de réglage (23),
caractérisé en ce que
d) les évidements (10) sont guidés radialement, et en ce que
e) chaque buse d'injection (11) possède un étranglement (29), au niveau duquel deux canaux de distribution (30), ayant un diamètre total plus grand que le diamètre de l'étranglement (29), se raccordent en aval, ceux-ci possédant chacun une embouchure latérale (32) dans le canal d'écoulement (8), orientée à angle droit par rapport au sens de l'écoulement (31) des gaz d'échappement, chaque buse d'injection (11) ne pénétrant que jusque dans son embouchure (32) dans le canal d'écoulement (8).

7. Dispositif selon la revendication 6, caractérisé en ce que chaque buse d'injection (11) possède une médiatrice (34) et les canaux de distribution (30) possèdent un axe médian (35), et entre les médiatrices (34) et les axes médians (35) est formé à chaque fois un angle d'injection (36) d'environ 60 degrés.

8. Dispositif pour la mise en oeuvre du procédé selon l'une quelconque des revendications 1 à 5, pour l'anneau de tuyère (7) d'une turbine à gaz d'échappement, qui :
a) se compose d'au moins un carter de turbine (1) comprenant un carter d'entrée de gaz et un carter de sortie de gaz (2, 3), d'un rotor de turbine (5) supporté par un arbre (4) et disposé dans le carter de turbine (1), d'un canal d'écoulement (8) formé entre le rotor de turbine (5) et le carter de turbine (1) pour les gaz d'échappement d'un moteur à combustion interne ainsi que de l'anneau de tuyère (7) disposé en amont du rotor de turbine (5),
b) présente plusieurs buses d'injection (11) disposées en amont de l'anneau de tuyère (7), lesquelles sont alimentées en eau (37) chacune par une conduite d'alimentation (18), et qui sont disposées chacune dans l'un de plusieurs évidements (10) formés dans le carter d'entrée de gaz (2), et
c) présente un organe de réglage (23) disposé dans la conduite d'alimentation (18), lequel est connecté activement à un organe de mesure (28) détectant les variations d'état des gaz d'échappement, ainsi qu'un élément de commande (27) disposé entre l'organe de mesure (28) et l'organe de réglage (23),
caractérisé en ce que
d) les évidements (10) sont guidés radialement et en ce que
e) les embouchures (32) des buses d'injection (11) sont orientées dans le sens de l'écoulement (31) des gaz d'échappement, chaque buse d'injection (11) ne pénétrant que jusque dans son embouchure (32) dans le canal d'écoulement (8).

9. Dispositif selon l'une quelconque des revendications 6 à 8, caractérisé en ce que la conduite d'alimentation (18) se divise en amont en une conduite d'eau (19) et une conduite d'air (20), un deuxième organe de réglage (24) étant disposé dans cette dernière et celui-ci étant également connecté à l'élément de commande (27).

10. Dispositif selon la revendication 9, caractérisé en ce qu'un clapet de non-retour (21, 22) est disposé à chaque fois dans la conduite d'air et la conduite d'eau (19, 20).

11. Dispositif selon l'une quelconque des revendications 6 à 10, caractérisé en ce qu'une conduite annulaire (13) est disposée dans ou au niveau du carter d'entrée de gaz (2), laquelle connecte les conduites (12) conduisant aux buses d'injection (11) à la conduite d'alimentation (18).
